# EUROPEAN PATENT APPLICATION

(11) **EP 1 588 614 A2**
(43) Date of publication of application: **26.10.2005**
(21) Application number: 05252424.6
(22) Date of filing: 19.04.2005
(51) Int. Cl.: A01K 89/027, A01K 89/01

(54) **Fishing reel**

(30) Priority: 23.04.2004 GB 0409148
(71) Applicant: FOX INTERNATIONAL GROUP LIMITED, Hainault, Essex IG6 3UT (GB)
(72) Inventor: Little, Andy, Farnham Surrey GU9 7BW (GB)
(74) Representative: Crouch, David John

(57) **Abstract**

A fishing reel (10) having a spool (24) with (a) a cylindrical portion (310) around which the fishing line is wound when the reel is in use and (b) two flanges (312 and 314) at respective opposite ends of and formed integrally with and extending outwardly from the cylindrical portion (310). The spool (24) is mounted on a shaft (224) to facilitate laying of the line on the spool (24) and playing out of the line from the spool (24). The spool (24) is coupled to the shaft (224) via an adjustable clutch arrangement (322, 326) which allows the spool (24) to spin on the shaft (224) with a degree of frictional drag determined by the setting of the adjustable clutch arrangement (322, 326). The clutch arrangement (322, 326) comprises at least one flange portion (326) which is secured to the shaft (224) and which has a diameter which exceeds that of the cylindrical portion of the spool (24). There are friction surfaces (322) between the said at least one flange portion (326) on the shaft (224) and one of the said two flanges (314) of the spool (24).

Also, a line clip (26; 1710, 1712) for a fishing reel (10) and a fishing reel (10) with such a clip, the latter comprising an anchor portion by which the clip (26; 1710, 1712) is attached to the reel (10) and a retaining portion which retains the line (916). The anchor portion and the retaining portion are connected together by a resiliently stretchable portion (910, 912; 1312, 1314; 1722) to reduce the shock applied to the line (916) when the line tugs on the clip (26; 1710, 1712) during a casting action.

Also, a line guide (30) for a fishing reel (10), and a reel (10) with such a guide (30), around which guide (30) any selected one of a plurality of different lines of different respective diameters may be wound, the guide (30) comprising a member (418) having a curved outer surface around and against which a fishing line passes when it is in use. The member (418) has a plurality of curved outer surfaces with respective peaks at different respective distances from an axis of rotation of the member (418) and in that the member is selectively indexable about that axis to bring the line into engagement with a selected one of those peaks appropriate to the diameter of the line.

## Description

The present invention relates to a fishing reel having a spool with (a) a cylindrical portion around which the fishing line is wound when the reel is in use and (b) two flanges at respective opposite ends of and formed integrally with and extending outwardly from the cylindrical portion, the spool being mounted on a shaft to facilitate laying of the line on the spool and playing out of the line from the spool, in which the spool is coupled to the shaft via an adjustable clutch arrangement which allows the spool to spin on the shaft with a degree of frictional drag determined by the setting of the adjustable clutch arrangement.

In previously proposed constructions, a relatively small flange formed on the shaft, the flange being substantially less in diameter than the diameter of the cylindrical portion of the spool, engages an abutment portion of the spool via a friction plate to create the clutch arrangement. Such a clutch arrangement inevitably results in a degree of wobble between the spool and the shaft. This can result in an uneven laying of the line when it is wound on to the spool, and renders the adjustment of the drag somewhat uncertain. It may even cause the spool to rub against a rotor of the fishing reel.

A first aspect of the present invention seeks to provide a remedy.

Accordingly, a first aspect of the present invention is directed to a fishing reel having the construction set out in the opening paragraph of the present specification, in which the clutch arrangement comprises at least one flange portion which is secured to the shaft and which has a diameter which exceeds that of the cylindrical portion of the spool, and friction surfaces between the said at least one flange on the shaft and one of the said two flanges of the spool.

Preferably, to give an evenly controlled drag, the friction surfaces are provided by friction plates sandwiched between the said at least one flange on the shaft and the said one of the flanges of the spool.

An even more stable rotation of the spool relative to the shaft can be obtained if a further flange is secured to the shaft, with friction surfaces between that further flange and the other of the flanges of the spool.

Preferably, these friction surfaces are also provided by friction plates sandwiched between the flanges concerned.

The said at least one flange may be secured to the shaft by means of a sleeve portion which is coaxial with the shaft. The sleeve may be integral with the said at least one flange. The said further flange may be provided with an internal screw thread which engages an external screw thread on the said sleeve such that rotation of the said further flange about the sleeve increases the friction engagement between the flanges of the shaft and the flanges of the spool.

At least one flat may be provided on the shaft and on the inside of the sleeve, which interengage and which inhibit rotation between the sleeve and the shaft. Preferably, the flat is one of the sides of a shaft portion which has more than one flat extending longitudinally. More preferably, the shaft has a hexagonal cross-section.

Rolling bearings, for example roller bearings, may be provided between the cylindrical portion of the spool and the shaft to improve the rotational characteristics of the spool around the shaft.

The said at least one flange on the shaft may be provided with a multiplicity of teeth spaced apart around its periphery, each having a 30° angle between its opposite faces. The teeth may be engaged by a pawl, preferably an adjustable pawl, which may be present merely to provide a clicking sound, the frequency of which is indicative of the speed of rotation of the spool around the shaft. Additionally, or alternatively, the pawl may be used to adjust the ease with which the spool can rotate around the shaft.

A line clip on a fishing reel is used to stop the line unwinding from the spool of the wheel during casting beyond a certain length so that the hook and weight can be positioned accurately in the waters being fished. However, when the full desired length of line has been cast and the tension in the line is applied to the clip, the line or the clip or other part of the fishing reel experience a shock which can cause damage.

A second aspect of the present invention seeks to provide a remedy.

Thus, according to a second aspect of the present invention, there is provided a line clip for a fishing reel comprising an anchor portion by which the clip is attached to the reel and a retaining portion which retains the line, characterised in that the anchor portion and the retaining portion are connected together by a resiliently stretchable portion to reduce the shock applied to the line when the line tugs on the clip during a casting action.

In one embodiment of such a line clip, the anchor portion is in the form of a stud received in a hole formed in the fishing reel, and the retaining portion comprises a stud retained in a slot formed in the fishing reel, in which the two studs are connected by an elastic portion or a spring. The elastic portion may be in the form of an O-ring.

In a different embodiment of the second aspect of the present invention, the clip comprises two elongate elastic portions pivoted together at respective ends which define the retaining portion of the clip and are held together at respective opposite ends which define the anchor portion. The clip may comprise neoprene, and the two portions may be held together by a snap fit.

The second aspect of the present invention extends to a fishing reel in the form of a spool having a cylindrical portion and two flanges at respective opposite ends and formed integrally with and extending outwardly from the cylindrical portion, and a skirt portion extending rearwardly from one of those flanges, the clip being recessed in the skirt portion with the anchor portion located further away from the cylindrical portion than the retaining portion.

Hitherto, fishing line is directed onto the spool, during winding, via a line guide in the form of a roller wheel. A disadvantage of this is that the diameter of the wheel, whilst being suitable for one thickness of line, will not be suitable as regards its diameter for another thickness of line.

A third aspect of the present invention seeks to provide a remedy.

Thus, according to a third aspect of the present invention there is provided a line guide for a fishing reel around which any selected one of a plurality of different lines of different respective diameters may be wound, comprising a member having a curved outer surface around and against which a fishing line passes when it is in use, characterised in that the member has a plurality of curved outer surfaces with respective peaks at different respective distances from an axis of rotation of the member and in that the member is selectively indexable about that axis to bring the line into engagement with a selected one of those peaks appropriate to the diameter of the line.

Advantageously, the line guide may be made of titanium or ceramic material to provide a smooth hard and heat resistant surface.

Preferably, there are three curved outer surfaces providing a generally triangular shape around the axis of the line guide. Indexing may be facilitated by means of a spigot, which can selectively engage any one of three holes spaced apart around the fixing flange of the line guide.

Instead of three peaks being provided, there may be four to eight peaks.

This third aspect of the present invention extends to a fishing reel having a spool and a bail arranged for rotation about the spool, in which the line guide is at one of the ends of the bail.

An example of a fishing reel made in accordance with each one of the three aspects of the present invention will now be described with reference to the accompanying drawings, in which:
- Figure 1: shows a perspective view of a fishing reel embodying the present invention;
- Figure 2: is a diagram showing internal gearing of the fishing reel shown in Figure 1 which enables a rotor thereof to rotate and a spool thereof to reciprocate;
- Figure 3: shows a perspective diagram of internal parts of the fishing reel shown in Figure 1;
- Figure 4: shows a perspective exploded diagrammatic view of a line guide made in accordance with the third aspect of the present invention;
- Figure 5: shows a perspective view of the line guide shown in Figure 4 in an assembled state;
- Figures 6 and 7: show a front and side view of part of the guide shown in Figure 4;
- Figure 8: shows a front view of a modified form of support for a line guide as shown in Figure 4;
- Figure 9: shows a perspective view of a first line clip embodying the second aspect of the present invention in a closed condition;
- Figure 10: shows the clip of Figure 9 in an open condition with a portion of a fishing line that is being threaded through it;
- Figure 11: shows a perspective view of the clip back in a closed position with that portion of line threaded through it;
- Figure 12: shows a further perspective view of the clip in a closed condition with the line that is threaded through it in a taut condition;
- Figure 13: shows a perspective view of a second line clip embodying the second aspect of the present invention;
- Figure 14: shows a perspective view of the clip shown in Figure 13 in a stretched condition;
- Figure 15: shows a side view of the clip shown in Figure 13 in a slightly open condition;
- Figure 16: shows a perspective view of a spool of a fishing reel provided with a line clip as shown in Figures 13 to 15;
- Figures 17 and 18: show respective elevational views of a further line clip embodying the second aspect of the present invention in retracted and extended conditions respectively;
- Figure 19: shows a sectional view through the line clip shown in Figure 17;
- Figure 20: is an exploded view of part of the embodiment of the second aspect of the present invention shown in Figure 19;
- Figure 21: shows the manner in which the embodiment of the second aspect of the present invention shown in Figures 17 to 20 is provided on the spool of a fishing reel; and
- Figure 22: shows a perspective view of the spool shown in Figure 21 without the line clip.

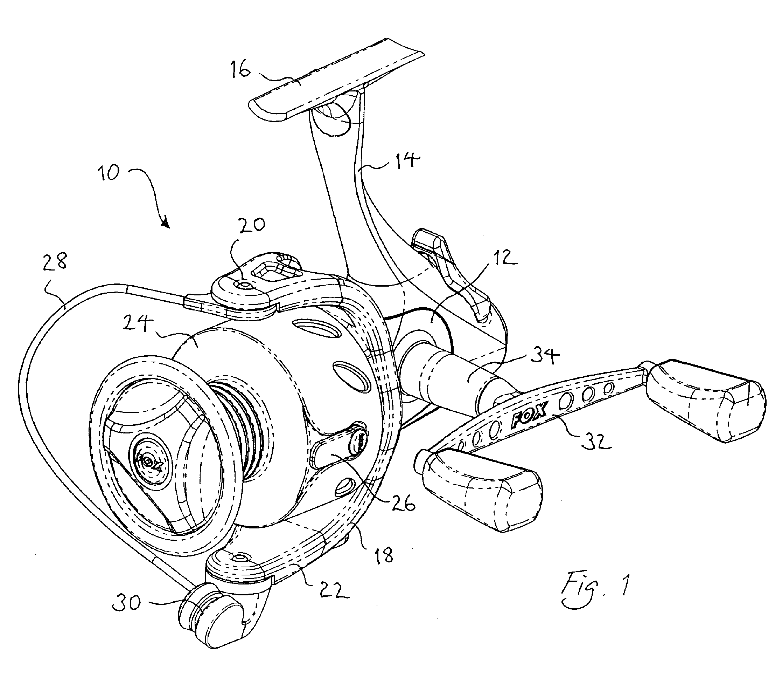

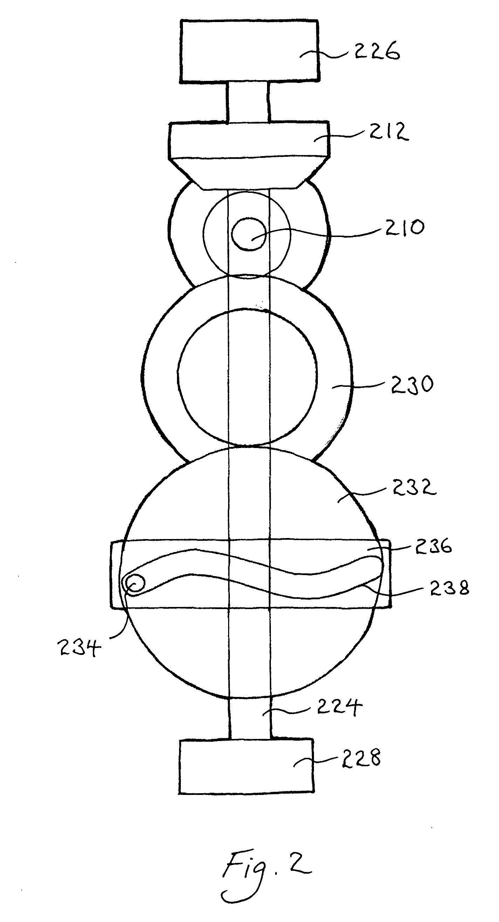

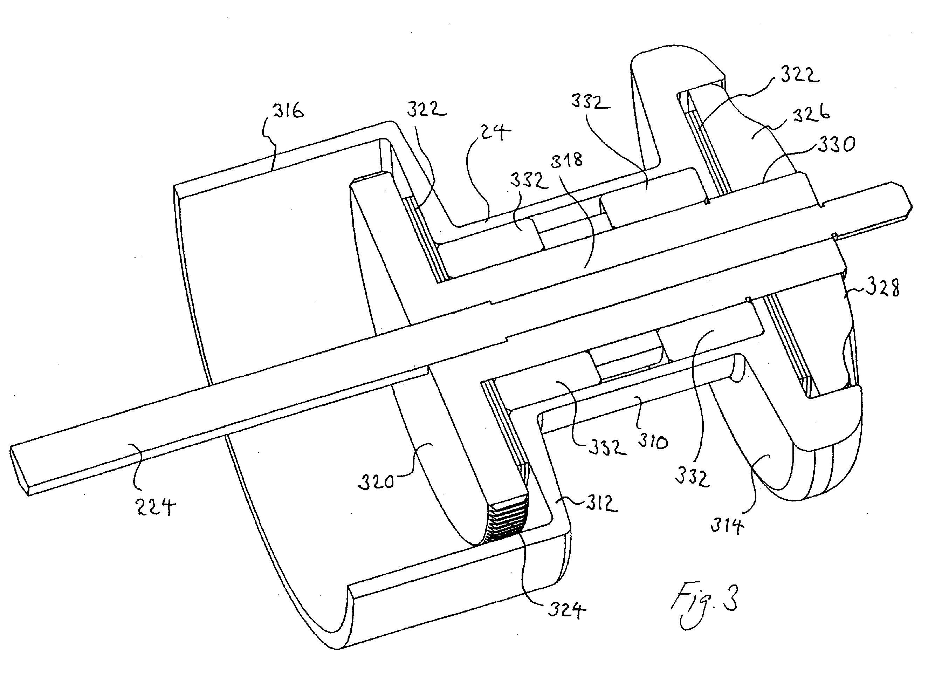

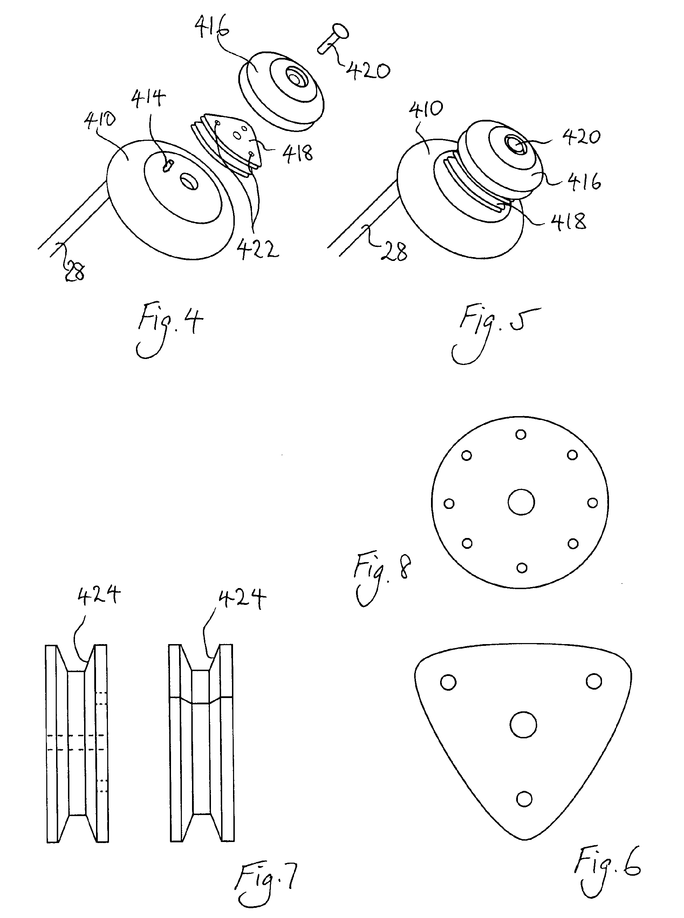

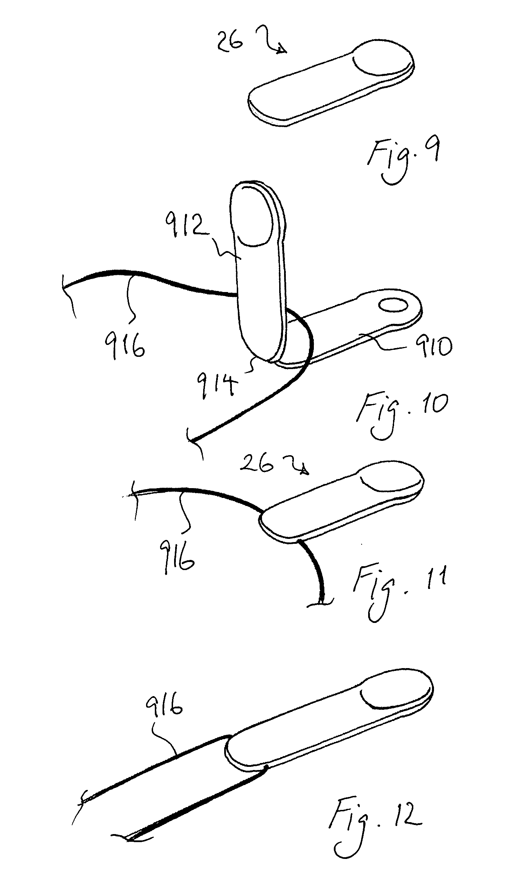

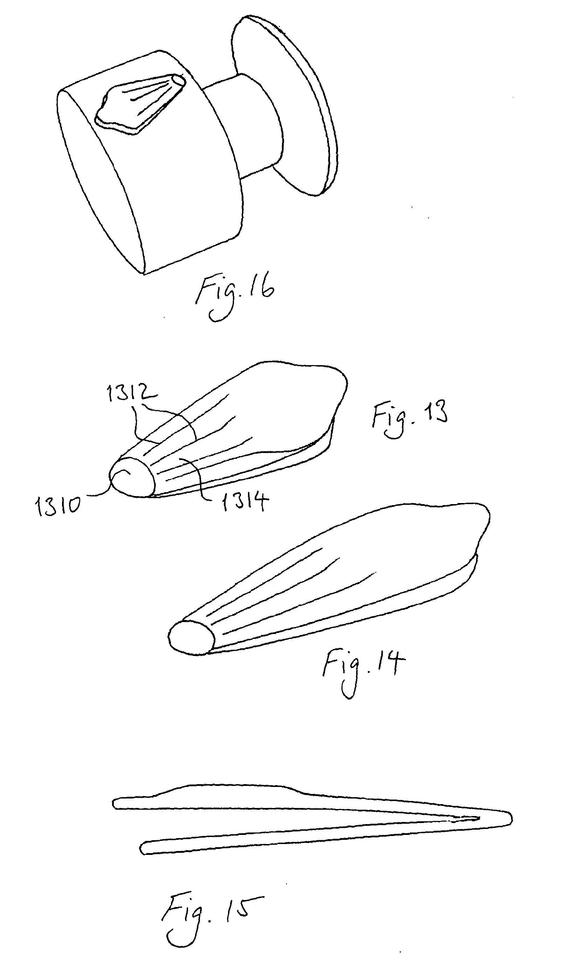

The fishing reel 10 shown in Figure 1 comprises a main body 12, a suspension leg 14 extending upwardly from the main body, a mounting foot 16 extending transversely of the leg 14 at an upper end thereof in an intended forward/rearward direction, a generally U-shaped rotor 18 mounted on an intended front end of the body 12 with its limbs 20 and 22 directed forwardly, a spool 24 mounted on the body 12 between the arms of the rotor 18, a line clip 26 secured to the spool 24, a bail 28 having respective ends pivoted to the forward ends of the limbs 20 and 22 respectively, and a line guide 30 arranged between one end of the bail 28 and its associated limb 22. A double-ended winding handle 32 is attached via a winding shaft housing 34 to one side of the main body 12 of the fishing reel 10.

The various parts of the fishing reel 10 may be made of an appropriately hard synthetic plastics material, or out of metal, stamp or die cast.

The bail 28 and with it the line guide 30 are pivotable about the ends of the limbs 20 and 22 between a line-guiding position as illustrated in Figure 1, in which the line is guided onto the spool 24, and a line-release position, in which the bail 28 is rotated 180° about the ends of the limbs 20 and 22, relative to the position shown in Figure 1, to take the bail 28 and the guide 30 out of the way of the line. In the line-guiding position, the plane of the line guide 30 is generally parallel with the axis of the spool 24, and the bail 28 extends around the spool 24. A shaft 210 which is within the housing 34 and which is fixed to the handle 32 is coupled by a bevelled gear to a portion 212 of the rotor 18 so that rotation of the handle 32 about the axis of the shaft 210 causes rotation of the rotor 18 about an axis which is at right angles to that of the shaft 210 and which extends in a forwardly direction.

A spool shaft 224 extends along this latter axis and is inhibited from rotation about that axis by bearings 226 and 228. The shaft 210 is also coupled via a gear train 230 to rotate a gear wheel 232 having a spigot 234 protruding outwardly from one of its sides at right angles to the axis of the spool shaft 224. A block 236 secured to the spool shaft 224 is formed with a slot 238 which extends generally transversely of the axis of the spool shaft 224, has a shallow S-shape, and is engaged by the spigot 234 so that rotation of the handle shaft 210 causes rotation of the rotor 18 and simultaneous reciprocation of the spool shaft 224 along its axis and with it the spool 24. The gear train 230 is such as to provide twenty-four rotations of the rotor 18 per inch (2.54cm) of movement of the spool 24.

Details of the construction of the spool 24 and the manner in which it is mounted on the spool shaft 224 are shown in Figure 3. Thus, the spool comprises a cylindrical portion 310 on to which fishing line (not shown) is wound when the fishing reel 10 is in use, respective circular flange portions 312 and 314 which are at respective opposite ends of the cylindrical portions 310, which are integral therewith, and which extend outwardly therefrom, and a cylindrical skirt portion 316 extending in an intended rearward direction from the intended rearward flange 312. The diameter of the spool is substantially 60mm and the depth of each of its flanges is about 28mm.

A sleeve 318 is coaxial with the shaft 224 and forms a close fit therewith, at least a portion of the sleeve 318 having an internal hexagonal cross-section which receives as a tight fit a hexagonal cross-sectioned portion of the shaft 224. The sleeve 318 extends through the whole length of the cylindrical portion 310 of the spool 24 and therebeyond at both ends. At an intended rearward end, it terminates with an integrally formed circular flange 320. The diameter of the flange 320 is a little less than that of the skirt 316 and is considerably greater than the cross-sectional diameter of the cylindrical portion 310. Circular PTFE friction plates 322 are inserted and sandwiched between the flange 320 secured to a shaft 224 and the flange 312 of the spool 24. The diameter of the flange 320 is substantially 50mm. The flange 320 is formed all the way around its outer periphery with teeth 324. The teeth are uniformly spaced around the periphery and there are one hundred and fifty of them. Each has opposite side faces at an angle of 30° to one another.

The forward flange 314 is formed with a recess in its forward side which accommodates a rotatable flange 326. The latter is formed with ridges on its outer face 328 to enable it to be manually rotated and is formed with an internal screw thread 330 which engages an external screw threading of the sleeve 318 so as to be able to be rotated to clamp the spool flanges 312 and 314 between the flanges 320 and 326 by an adjustable amount. Further circular PTFE friction plates 322 are inserted and sandwiched between the flange 326 on the shaft via the sleeve 318, and the flange 314 of the spool 24. The frictional characteristics of the screw thread 320 and those of the surfaces between the flange 326 and the flange 314 are such as to ensure a sliding between the friction plates 322 rather than an unscrewing of the flange 326 from the sleeve 318. In addition, or alternatively, a nylon locking device (not shown) could be used to ensure that there is no unscrewing. Teflon seal roller bearings 332 are arranged between the inside of the cylindrical portion 310 of the spool 24 and the outside of the sleeve 318, to facilitate smooth rotation of the spool 24 about the spool shaft 224.

With the bail 28 in its line-release position, and a line (not shown) wound around the spool 24, and held temporarily, where the line leaves the spool, by a user's finger against the rod to stop the line unravelling from the spool 24, a weight and hook assembly (not shown) at one end of the line can be cast so that the line on the spool unwinds whilst the spool 24 remains stationary relative to the main body 12 of the fishing reel 10. The bail 28 may now be rotated by the user to its line-guiding position and any slack on the line may be taken up by rotation of the handle 32. Initially such rotation causes the fishing line to be directed by the bail 28 onto the guide 30, and thereafter wound around the cylindrical portion 310 of the spool 24 by virtue of the rotation of the rotor 18 and with it the bail 28 and the guide 30. Thus, line extending from the weight and hook arrangement is guided by the bail 28 on to the guide 30 where the line turns through a right angle and then extends on to the cylindrical portion 310 of the spool 24. As the line is wound on to the cylindrical portion 310, the reciprocation of the spool ensures that successive turns of the line around the cylindrical portion 310 are laid neatly adjacent to the immediately preceding turn without excessive spacing and at the same time without any crossing of successive turns.

In the event of a subsequent strike when a fish bites on the hook (not shown), and the angler is ready to play the fish, the clutch mechanism shown in Figure 3 comes into effect. At this stage the line may only be played out by rotation of the spool 24 to feed out the fishing line via the guide 30, with the clutch construction shown in Figure 3 acting as a drag. In the event that the fish swims towards the fishing reel, slack may be taken up by rotation of the handle 32 so that the line is retrieved and laid down on the cylindrical portion 310 of the spool 24 as already described herein. The clutch arrangement as shown in Figure 3 ensures a uniform action of the clutch which can be adjusted with precision and which at the same time does not result in wobble of the reel 24 on the shaft 224 which could adversely affect the laying of the line on the spool.

With the bail 28 in its line-guiding position as shown in Figure 1, and with line (not shown in Figure 1) extending around the line guide 30 through a 90 turn and onto the spool 24, the line is layed onto the cylindrical portion 310 of the spool 24 such that successive turns of line touch one another, so that for a given number of turns per oscillation of the spool 24, the total length of the helix of line layed onto the spool 24 will be different for different thicknesses of line. This will affect the position of the front and rear ends of the helix on the spool 24. It is desirable to have the front end of the helix against the front flange 314 of the spool 24 so that there is neither a gap between that end of the helix and that flange, nor is there a bundling of the line at that flange because of a lack of space for that end of the helix. This ensures a good release of the line upon casting. Therefore, a different relative positioning between the line where it leaves the guide 30 on its way to the spool 24, and the spool 24 itself at its rearward end of travel is desired for a different thickness of line. This is achieved by altering the effective diameter of the line guide 30.

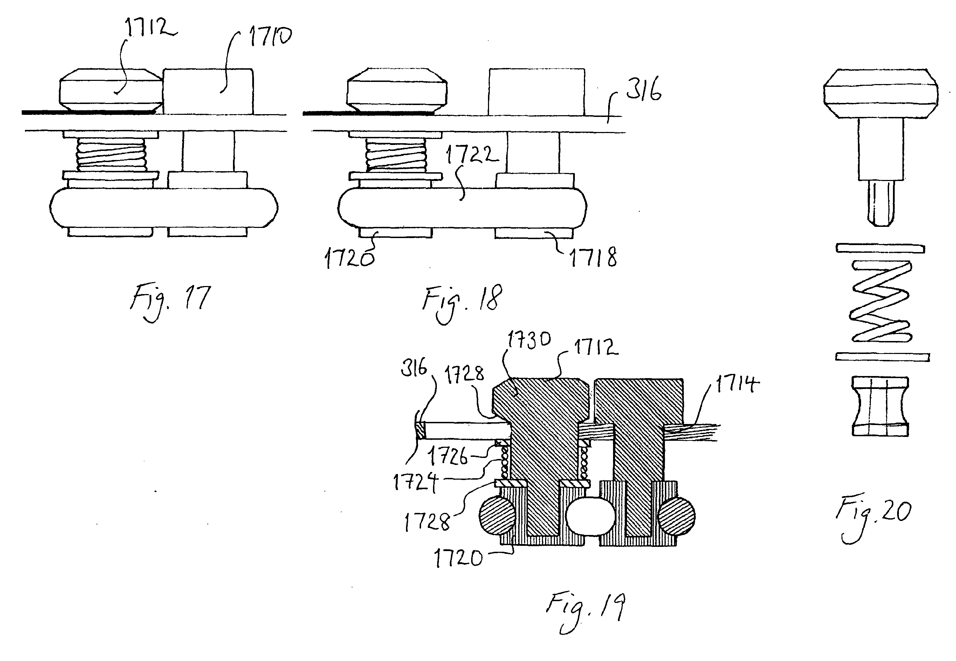

To this end, the line guide 30 has a construction which is shown in greater detail in Figures 4 to 7. Thus, it comprises a first flange member 410, to which one end of the bail 28 is attached, and which has an inner planar face 412, from which a spigot 414 projects.

The line guide 30 has a further flange member 416. A generally flat triangular guide member or element 418 is held between the two flange portions 410 and 416 by means of a bolt 420 which extends through holes formed in the centres of both flange portions 410 and 416, as well as the guide element 418. The guide element 418 is formed with three blind or through-holes 422 in a fixing flange of the element 418 located towards the three apices of the triangular form of the element 418. The spigot 414 may be inserted in or through any selected one of these blind or through-holes 422.

The guide element 418 is formed with a groove 424 around its outer periphery and the surface of the bottom of the groove progressing in a direction around the element 418 has respective different radii of curvature at the three sides of the triangular form of the element 418.

As a result, by unscrewing the bolt 420, separating the flange portions 410 and 416, and rotating the guide element 418, a selected one of the curvatures of the groove 424 can be brought to bear on the line (not shown) where it comes into contact with the guide element 418. It will be appreciated that whilst the guide element 418 can be indexed, once the desired rotary position of that element 418 has been selected, and the parts of the line guide re-assembled by tightening the bolt 420, the guide element 418 does not then rotate as the line is played out or retracted. The line therefore abuts and slides around the line guide only around the selected radius of curvature of the groove 424. This enables the correct radius of curvature to be selected for the best laying of the line on the spool according to the thickness of the line being laid.

Although the guide element 418 has been described with only three index positions offering one of only three possible radii of curvature of the groove 424 to the line, it would be possible for a different number of indexing positions to be selected to enable any one of a corresponding number of curved surfaces to be offered to the line.

Thus, Figure 8 shows a side view of a guide element having eight possible rotary positions. In this case the base of the groove 424 would need to provide eight different curved surfaces, each of which peaks at respective different distances from the centre of the guide element. It is not necessary in this case for the radii of curvature at the peaks to vary. What is essential is that the distance of the line from the centre of the guide element where it ceases to contact that element on its way to the spool is at a different distance from the centre of the element for each peak. This applies equally to the element 418 shown in Figure 4 as it does to the element shown in Figure 8.

The line clip 26 is shown in greater detail in Figures 9 to 12. This clip enables a set length of line to be cast, to enable the angler to drop the hook and weight at a particular location in the waters he is fishing. Thus, if by trial and error he is able to find the desired location for the hook and weight, he may secure that portion of the line where it leaves contact with the spool 24, or where it leaves contact with other portions of the line which have been laid on the spool 24, and secure it to the casting clip 26. He may then wind the line back on to the spool 24 so that upon a subsequent casting, the line will unwind itself from the spool 24 as far as the portion of line which is held by the clip 26.

The clip 26 shown in Figures 9 to 12 comprises a first limb 910 and a second limb 912 pivoted to the first part 910 by a relatively narrow bridging portion 914 linking the two limbs 910 and 912. The limbs 910 and 912 are generally flat and elongate, and are integrally moulded out of a synthetic plastics material. When the clip 26 is in its closed condition, the limb 912 lies flat on top of the limb 910, which is therefore obscured from view. Both limbs at their ends further from the pivot 914 are widened so that each limb has a generally keyhole shape in outline. The lower limb 910 is formed with a through-hole at its end further from the pivot 914 to enable it to be secured to a protuberance on the outside of a skirt 316 in the spool 24. The clip 26 is recessed in the skirt 316 and does not protrude above the cylindrical portion of the spool 24. This ensures that it does not interfere with the winding of the line onto the spool 24, neither does it cause the line to be caught or snagged. The ends of the limbs 910 and 912 further from the pivot 914 have interengaging formations which enable that end of the limb 912 to be snap-fitted on to the corresponding end of the limb 910.

The pivot end 914 of the clip 26 when it is in the closed position, as shown in Figure 9, is located on the edge of the skirt 316 where it meets the flange 312 of the spool 24.

To hold a portion of fishing line 916 in the clip 26, the latter is open, as shown in Figure 10, the line 916 is threaded around the inside of the pivot portion 914, and the clip 26 is then closed once again, as shown in Figure 11. In the event that the line 916 becomes taut, such as during casting, the neoprene material of the clip 26 enables it to stretch as shown in Figure 12 so as to reduce the shock experienced by both the line, the clip, and the fishing reel, and reduce the likelihood of damage being done to any of them.

In the embodiment of line clip shown in Figures 13 to 16, the clip has broadly the same construction as the embodiment shown in Figures 9 to 12, except that the pivot portion 1310 comprises a different material, such as a hard synthetic plastics material or a metal material, whilst the remainder of the clip comprises a rubber or rubber-like material. Furthermore, the clip flares in the direction from the pivot portion 1310 and is formed with strengthening ribs 1312 on the outer side of the upper limb 1314. Lastly, a lip 1316 is formed on the far end of the upper limb further from the pivot portion 1310, to enable the upper limb 1314 to be lifted more easily by a thumb.

An entirely different embodiment of line clip of the present invention is shown in Figures 17 to 20. It comprises two studs 1710 and 1712. The former is secured in a hole 1714 formed in the skirt 316 of the spool 24, as shown more clearly in Figure 22. The other stud 1712 is held in a slot 1716 formed in the skirt 316 of the spool 24. The slot is positioned more closely to the flange 312 than the hole 1714, and is arranged to extend perpendicularly to the flange 312 in line with the hole 1714. Each stud 1710 and 1712 extends right the way through the skirt 316, and on the underside of the skirt each is formed with a respective grooved guide 1718 and 1720 around which extends an elastic O-ring 1722. A compression spring 1724 is located between two washers 1726 and 1728 so as to urge the latter away from one another, one of the washers 1726 resting against the inside surface of the skirt 316, and the other of the washers 1728 resting against the guide 1720 of the stud 1712.

The underside 1728 of a head portion 1730 of the stud 1712 which is on the outer side of the skirt 316 slants downwardly towards the skirt 316.

When the clip is used, fishing line (not shown in Figures 17 to 20) may be guided around the stud 1712 and underneath the head 1730 thereof so that it is pinched between that head and the skirt 316. During casting, when the desired amount of line has unwound itself from the spool 24, it tugs on the stud 1712 which is able to move towards the flange 312 against the resilient restoring force of the O-ring 1722. This softens the shock experienced by the line, the clip and the fishing reel to reduce the likelihood of damage being done to any of them.

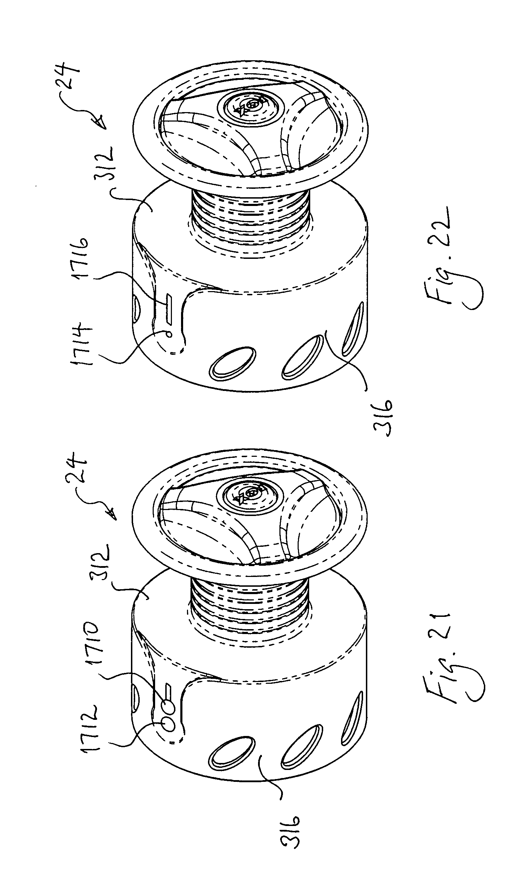

Figure 20 shows how the component parts of the stud 1712 are assembled and secured to the skirt 316, by virtue of an interengaging screw-threaded shank 1732 extending from the head 1730 and an internally screw-threaded hole 1734 in the guide 1720.

The illustrated embodiments are given by way of example only. Many variations may occur to the reader without taking the resulting construction outside the scope of the present invention. For example, further plates may be secured to the inner sides of the spool flanges which plates may be fixed to those flanges and which abut the friction plates. The reciprocating motion of the spool shaft may be affected by a worm gear arrangement instead of the S-drive illustrated in Figure 2.

More friction plates can be positioned adjacent to the front flange of the spool 24, or alternatively more friction plates can be placed adjacent to the rear flange of the spool, than the other flange of the spool. This shifts the spool slightly to a different position along the shaft. It may be used to adjust the lay between coning and a flat line lay. Such adjustments of the clutch mechanism can be retained in respective different spools for respective styles of fishing, so that the user can select the spool ready-adjusted for the style of fishing he is about to commence. In addition or in the alternative, such adjustments can be used to adapt the reel to different thicknesses or different strengths of line.

## Claims

**1.** A fishing reel (10) having a spool (24) with (a) a cylindrical portion (310) around which the fishing line is wound when the reel is in use and (b) two flanges (312 and 314) at respective opposite ends of and formed integrally with and extending outwardly from the cylindrical portion (310), the spool (24) being mounted on a shaft (224) to facilitate laying of the line on the spool (24) and playing out of the line from the spool (24), in which the spool (24) is coupled to the shaft (224) via an adjustable clutch arrangement (322, 326) which allows the spool (24) to spin on the shaft (224) with a degree of frictional drag determined by the setting of the adjustable clutch arrangement (322, 326), **characterized in that** the clutch arrangement (322, 326) comprises at least one flange portion (326) which is secured to the shaft (224) and which has a diameter which exceeds that of the cylindrical portion of the spool (24), and friction surfaces (322) between the said at least one flange portion (326) on the shaft (224) and one of the said two flanges (314) of the spool (24).

**2.** A fishing reel according to claim 1, **characterised in that** the friction surfaces (322) are provided by friction plates (322) sandwiched between the said at least one flange portion (326) on the shaft (224) and the said one of the flanges (314) of the spool (24).

**3.** A fishing reel according to claim 2, **characterised in that** a further flange portion (320) is secured to the shaft (224), with friction surfaces (322) between that further flange portion (320) and the other of the flanges (312) of the spool (24).

**4.** A fishing reel according to claim 3, **characterised in that** the friction surfaces (322) referred to in claim 3 are also provided by friction plates (322) sandwiched between the flange portion (320)and the flange (312).

**5.** A fishing reel according to any preceding claim, **characterised in that** the said at least one flange portion (326) is secured to the shaft (224) by means of a sleeve portion (318) which is coaxial with the shaft (224) .

**6.** A fishing reel according to claim 5, **characterised in that** the sleeve portion (318) is integral with the said at least one flange portion (326).

**7.** A fishing reel according to claim 3, or one of claims 4 and 5 read as appended to claim 3, **characterised in that** the said further flange portion (320) is provided with an internal screw thread (330) which engages an external screw thread on the said sleeve portion (318) such that rotation of the said further flange portion (320) about the sleeve portion (318) increases the friction engagement between the flange portions (320, 326) of the shaft (224) and the flanges (312, 314) of the spool (24).

**8.** A fishing reel according to any one of claims 5 to 7, **characterised in that** at least one flat is provided on the shaft (224) and on the inside of the sleeve portion (318), which interengage and which inhibit rotation between the sleeve portion (318) and the shaft (224).

**9.** A fishing reel according to claim 9, **characterised in that** the flat is one of the sides of a shaft portion which has more than one flat extending longitudinally.

**10.** A fishing reel according to claim 10, **characterised in that** the shaft (224) has a hexagonal cross-section.

**11.** A fishing reel according to any preceding claim, **characterised in that** rolling bearings (332) are provided between the cylindrical portion (310) of the spool (24) and the shaft (224) to improve the rotational characteristics of the spool (24) around the shaft (224).

**13.** A fishing reel according to any preceding clam, **characterised in that** the said at least one flange portion (326) on the shaft (224) is provided with a multiplicity of teeth (324) spaced apart around its periphery, each having a 30° angle between its opposite faces.

**14.** A fishing reel according to claim 13, **characterised in that** the teeth (324) are engaged by a pawl, preferably an adjustable pawl, to provide a clicking sound, the frequency of which is indicative of the speed of rotation of the spool (24) around the shaft (224).

**15.** A fishing reel according to claim 14, **characterised in that** the pawl is constructed so that it can be used to adjust the ease with which the spool (24) can rotate around the shaft (224).

**16.** A line clip (26; 1710, 1712) for a fishing reel (10) comprising an anchor portion by which the clip (26; 1710, 1712) is attached to the reel (10) and a retaining portion which retains the line (916), **characterised in that** the anchor portion and the retaining portion are connected together by a resiliently stretchable portion (910, 912; 1312, 1314; 1722) to reduce the shock applied to the line (916) when the line tugs on the clip (26; 1710, 1712) during a casting action.

**17.** A line clip according to claim 16, **characterised in that** the anchor portion (1710) is in the form of a stud (1710) received in a hole formed in the fishing reel (10), and the retaining portion (1712) comprises a stud (1712) retained in a slot formed in the fishing reel (10), in which the two studs (1710, 1712) are connected by an elastic portion (1722) or a spring.

**18.** A line clip according to claim 17, **characterised in that** the elastic portion (1722) is in the form of an O-ring (1722).

**19.** A line clip according to claim 16, **characterised in that** the clip (26) comprises two elongate elastic portions (910, 912; 1312, 1314) pivoted together at respective ends which define the retaining portion of the clip (26) and are held together at respective opposite ends which define the anchor portion.

**20.** A line clip according to claim 19, **characterised in that** the two portions (910, 912; 1312, 1314) are held together by a snap fit.

**21.** A line clip according to any one of claims 16 to 19, **characterised in that** the clip (26) comprises neoprene.

**22.** A fishing reel (10) in the form of a spool (24) having a cylindrical portion (310) and two flanges (312 and 314) at respective opposite ends and formed integrally with and extending outwardly from the cylindrical portion (310), and a skirt portion (316) extending rearwardly from one (312) of those flanges and a clip (26; 1710, 1712) claimed in any one of claims 16 to 21, the clip being recessed in the skirt portion with the anchor portion located further away from the cylindrical portion (310) than the retaining portion.

**23.** A line guide (30) for a fishing reel (10) around which any selected one of a plurality of different lines of different respective diameters may be wound, comprising a member (418) having a curved outer surface around and against which a fishing line passes when it is in use, **characterised in that** the member (418) has a plurality of curved outer surfaces with respective peaks at different respective distances from an axis of rotation of the member (418) and **in that** the member (418) is selectively indexable about that axis to bring the line into engagement with a selected one of those peaks appropriate to the diameter of the line.

**24.** A line guide according to claim 23, **characterised in that** the line guide (30) comprises titanium.

**25.** A line guide according to claim 23, **characterised in that** the line guide (30) comprises ceramic material.

**26.** A line guide according to any one of claims 23 to 25, **characterised in that** indexing is facilitated by a plurality of holes (422) spaced apart around the line guide (30), any one of which may be engaged by a spigot.

**27.** A line guide according to any one of claims 23 to 26, **characterised in that** the member (418) has three curved outer surfaces providing a generally triangular shape around the axis of the line guide (30).

**28.** A line guide according to any one of claims 23 to 26, **characterised in that** the member (418) has from four to eight curved over surfaces with respective peaks.

**29.** A fishing reel (10) having a spool (24) and a bail (28) arranged for rotation about the spool (24), **characterised in that** a line guide (30) according to any one of claims 23 to 28 is at one of the ends of the bail (28).
